# FASCICULE DE BREVET EUROPEEN

(11) **EP 4 267 946 B1**
(45) Date de publication et mention de la délivrance du brevet: **10.09.2025**
(21) Numéro de dépôt: 21848169.5
(22) Date de dépôt: 09.12.2021
(51) Int. Cl.: G01N 21/90

(54) **PROCEDE POUR DETECTER DES DEFAUTS DU JOINT HORIZONTAL DE MOULE POUR DES RECIPIENTS EN VERRE**
VERFAHREN ZUR ERKENNUNG VON DEFEKTEN DER HORIZONTALEN FORMDICHTUNG FÜR GLASBEHÄLTER
METHOD FOR DETECTING DEFECTS OF THE HORIZONTAL MOLD SEAL FOR GLASS CONTAINERS

(30) Priorité: 22.12.2020 FR 2013948
(43) Date de publication de la demande: 01.11.2023
(73) Titulaire: TIAMA, 69230 Saint-Genis-Laval (FR)
(72) Inventeur: FAYOLLE, Lubin, 69530 BRIGNAIS (FR); FOUILLOUX, Julien, 69003 LYON (FR)
(74) Mandataire: Cabinet Beau de Loménie
(86) Numéro de dépôt international: PCT/FR2021/052261
(87) Numéro de publication internationale: WO 2022/136761

(56) Documents cités:
- WO-A1-2013/128538
- US-A- 5 753 905

## Description

### Domaine Technique

La présente invention concerne le domaine technique de l'inspection d'objets, d'articles creux ou, d'une manière générale, de récipients transparents ou translucides, tels que, par exemple, des bouteilles, des pots ou des flacons réalisés en verre.

L'objet de l'invention vise plus précisément le domaine de l'inspection de tels récipients en verre, en vue de déceler, sur la bague de tels récipients, la présence de défauts pour le joint horizontal de moule.

### Technique antérieure

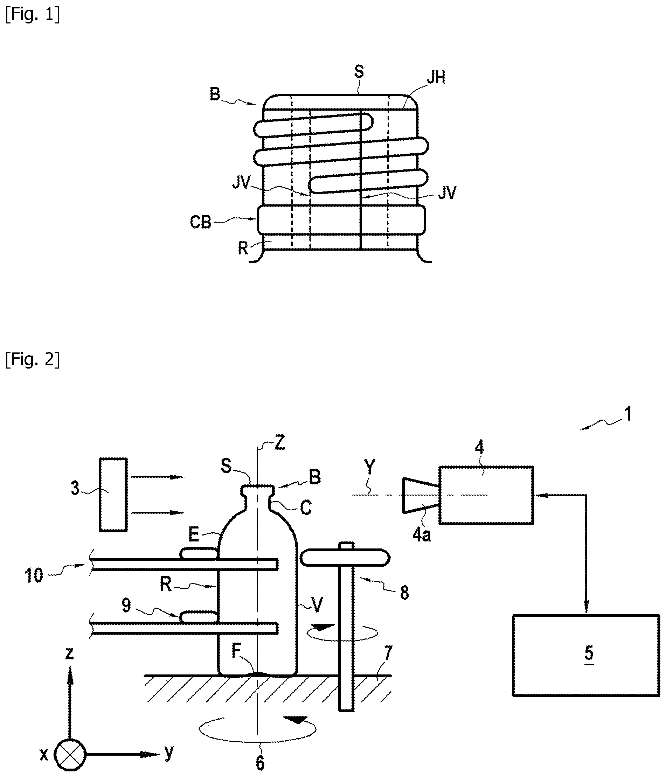

D'une manière générale, un récipient présente un fond à partir duquel s'élève une paroi verticale se terminant par une partie dite de bague. La bague est de différents types selon le système de fermeture prévu et comporte comme illustré à la Figure 1, en haut, la surface de bague S, annulaire, et en bas une contre-bague CB. Cette Figure 1 représente une bague de type à vis, comportant également des filets sur une portion verticale cylindrique. Il est connu que les récipients en verre sont fabriqués par une machine de formage dite machine IS constituée de différentes sections indépendantes de formage alimentées par des gouttes de verre malléable. Ces sections de formage sont équipées chacune d'au moins une cavité d'ébauchage équipée d'un moule ébaucheur, et du même nombre de cavités de finition, recevant chacune un moule finisseur dans lequel les récipients prennent leur forme finale à haute température.

De manière classique, la bague est formée dans le moule ébaucheur. Lorsque l'ébauche est transférée dans le moule finisseur, la bague est déjà formée et l'ébauche est maintenue par la bague. Pour ce faire, la bague est formée par les moules de bagues composés de deux demi-moules formant la paroi verticale de la bague et une partie de moule appelée anneau qui forme la surface de bague ou surface d'étanchéité de la bague. Le moule ébaucheur comporte également deux demi-moules de corps d'ébauche pour former la paroi du corps de l'ébauche. Lors du formage par le procédé pressé-soufflé, un poinçon vient pousser le verre contre les demi-moules de corps d'ébauche. Lors du formage par le procédé soufflé-soufflé, le poinçon est plus court, il entre dans le moule de bague, mais c'est l'air comprimé qui vient pousser le verre contre les demi-moules de corps d'ébauche. Ainsi, l'extérieur de la paroi verticale de la bague est formé par deux demi-moules de bague, la surface supérieure de la bague est formée par l'anneau et l'intérieur de la bague est formé par le poinçon. En conséquence, chaque bague de récipient R comporte comme illustré à la Figure 1, de part et d'autre de sa paroi verticale, un joint vertical de moule JV correspondant à l'interface entre les deux demi-moules de bague et un joint horizontal de moule JH correspondant à l'interface entre la partie de moule de bague appelée anneau et les deux demi-moules de bague. Ces joints de moule de bague sont plus ou moins marqués ou apparents sur les récipients, selon l'ajustement des parties du moule qui se détériorent avec l'usage.

Il est à considérer que le joint horizontal de moule JH est situé légèrement en dessous de la surface de bague S des récipients. Aussi, il apparait le besoin de détecter les défauts qui affectent le joint horizontal de moule des récipients pour éliminer les récipients qui comportent des défauts susceptibles d'affecter leur caractère esthétique ou, plus grave, de présenter un réel danger pour l'utilisateur.

Dans l'état de la technique, la société AGR INTERNATIONAL propose par une machine de contrôle de laboratoire DSG400 mesurant avec précision, les caractéristiques dimensionnelles des récipients, la possibilité de détecter les défauts du joint horizontal de moule connus sous les noms de picot externe (KNOCK OUT) et de bavure externe (FLANGE). Cette machine comprend notamment une source de lumière située d'un côté du récipient et une caméra située de l'autre côté du récipient. Lors de la prise des images, le récipient est entrainé en rotation autour de son axe vertical. Une telle machine ne semble pas conçue pour détecter tous les défauts du joint horizontal de moule. Par ailleurs, cette machine présente une cadence limitée de contrôle qui ne permet pas de contrôler les récipients avec les cadences de fabrication connues sur les lignes de fabrication des récipients.

Le document WO 2013/128538 décrit un procédé pour détecter sur la bague de récipients en verre, des défauts du joint horizontal de moule. Ce procédé vise à assurer la rotation du récipient sur lui-même et à projeter verticalement une ligne lumineuse sur la bague. Une caméra linéaire récupère la lumière réfléchie par la bague. Le procédé consiste à analyser la lumière réfléchie afin de déduire un défaut en cas de variation du profil de la lumière réfléchie. Ce procédé n'est apte à détecter que les bavures dont la forme leur fait réfléchir la lumière en direction de la caméra, et il ne permet pas de quantifier la dimension des défauts et ne permet pas non plus de détecter différents types de défauts du joint horizontal de moule des récipients tout en présentant un très haut niveau de fiabilité pour détecter des défauts de petite taille.

Il apparait donc le besoin de disposer d'une technique permettant de détecter à haute cadence, les différents défauts du joint horizontal de moule des récipients tout en présentant un très haut niveau de fiabilité pour détecter des défauts de petite taille typiquement inférieur au mm, tout en évitant de considérer des récipients défectueux alors que le joint horizontal de moule de tels récipients respecte en réalité les critères de qualité requis.

### Exposé de l'invention

L'objet de l'invention vise donc à satisfaire ce besoin en proposant un procédé pour détecter à haute cadence sur la bague de récipients en verre, des défauts du joint horizontal de moule, un tel procédé présentant un très haut niveau de fiabilité pour détecter des défauts de joint horizontal de moule de petite taille tout en évitant de considérer des récipients défectueux alors que le joint horizontal de moule de tels récipients respecte en réalité les critères de qualité requis.

Pour atteindre un tel objectif, l'objet de l'invention propose un procédé pour détecter sur la bague de récipients en verre présentant chacun un axe vertical, des défauts du joint horizontal de moule, le procédé comprenant pour la détection de défauts pour chaque récipient, les étapes suivantes :
- disposer le récipient entre une source lumineuse et une caméra de prise d'images dont l'axe optique d'observation est sensiblement perpendiculaire à un axe parallèle à l'axe vertical du récipient et dont le champ de vision comprend au moins le bord gauche de la bague ou le bord droit de la bague, incluant au moins une partie du joint horizontal de moule ;
- assurer la rotation du récipient sur lui-même selon l'axe vertical selon au moins un tour de rotation ;
- acquérir par la caméra, à chaque incrément de rotation du récipient, une image de sorte que le nombre d'images par tour de rotation soit supérieur à 36 ;
- analyser pour chaque récipient, les images prises de manière que :
   * on définit dans les images, une zone d'inspection de la bague sur une hauteur de la bague incluant au moins une partie du joint horizontal de moule ;
   * on détecte dans la zone d'inspection des images, le profil du bord de bague ;
   * on compare les profils du bord de bague des images avec un profil de référence du bord de bague, de manière à détecter des écarts entre ces profils du bord de bague et le profil de référence du bord de bague ;
   * et on détecte un défaut de joint horizontal de moule pour un récipient lorsqu'au moins une image dudit récipient présente un écart.

Selon une variante avantageuse de réalisation, on dispose la caméra de manière que le champ de vision comprend au moins une partie du joint horizontal de moule et une référence dont la position en altitude est connue par rapport au joint horizontal de moule et en ce que pour définir dans les images, la zone d'inspection de la bague, on recherche la référence dont la position en altitude est connue par rapport au joint horizontal de moule, et on positionne la zone d'inspection de la bague par rapport à la référence de manière que la zone d'inspection de la bague s'étend sur une hauteur incluant le joint horizontal de moule.

Par exemple, on recherche dans les images en tant que référence, tout ou partie de la surface de bague ou de la contre bague.

Typiquement, on dispose d'une caméra de prise d'images dont la largeur horizontale du champ de vision est comprise entre 5mm et 130mm et la hauteur du champ de vison est comprise entre 3mm et 20mm.

Par exemple, on dispose d'une caméra de prise d'images présentant une résolution supérieure à 25 pixels/mm.

Selon une caractéristique préférée de mise en œuvre, on positionne la caméra de prise d'images de manière que son axe optique d'observation soit sensiblement tangent au bord gauche ou droit de la bague.

Le procédé selon l'invention peut utiliser une caméra munie d'un objectif télécentrique.

Selon une caractéristique avantageuse de réalisation, on dispose d'une source lumineuse présentant des dimensions verticale et horizontale d'illumination comprises entre 100% et 200% et de préférence 120% des dimensions du champ de vision de la caméra multipliées par la distance entre la source lumineuse et l'objectif de la caméra et divisée par la distance entre l'axe des récipients et l'objectif de la caméra.

Selon un autre mode de réalisation, on dispose d'une source lumineuse télécentrique dont le champ illuminé présente des dimensions supérieures ou égales aux dimensions du champ de vision de la caméra.

Selon une variante de réalisation, on compare les profils du bord de bague des images avec un profil de référence du bord de bague, en utilisant en tant que profil de référence, au moins un profil obtenu sur au moins un récipient de référence jugé conforme, de manière à détecter des écarts.

Selon une autre variante de réalisation, on compare les profils du bord de bague des images avec un profil de référence du bord de bague, en utilisant en tant que profil de référence, un profil moyen calculé sur plusieurs incréments de rotation d'au moins un récipient de référence jugé conforme, de manière à détecter des écarts.

Selon une autre variante de réalisation, on compare les profils du bord de bague des images avec un profil de référence du bord de bague, en utilisant en tant que profil de référence, un profil du bord de bague auquel est appliqué un filtre passe-bas, de manière à détecter des écarts.

Selon une autre variante de réalisation, on compare les profils du bord de bague des images avec un profil de référence du bord de bague, en appliquant un filtre passe-haut sur les profils du bord de bague, de manière à détecter des écarts.

Avantageusement, pour chaque image, on compare pour au moins plusieurs altitudes dans la zone d'inspection, le profil du bord de bague et le profil de référence du bord de bague, en comparant au moins une mesure d'aire, d'amplitude et/ou de pente à un seuil et on détecte un écart lorsqu'au moins une de ces mesures dépasse ce seuil.

D'une manière générale, le procédé consiste à détecter au moins un défaut de joint horizontal de moule pris parmi les défauts suivants : picot externe, bavure externe et anneau décalé.

Selon un mode préféré de réalisation, on définit pour chaque défaut suivant à savoir, picot externe, bavure externe et anneau décalé, au moins un critère de détection et le procédé consiste à discriminer les défauts détectés parmi ces trois défauts en utilisant au moins un de ces critères de détection.

Selon une caractéristique de mise en œuvre, on choisit comme critère de détection, pour au moins une image, la forme des écarts détectés pour plusieurs altitudes dans la zone d'inspection.

Selon une autre caractéristique de mise en œuvre, on choisit comme critère de détection, l'étendue angulaire d'observation des écarts correspondant au nombre d'images successives dans lesquelles un écart est détecté.

Pour discriminer le défaut anneau décalé par rapport aux défauts, picot externe et bavure externe, on analyse la forme des écarts détectés pour plusieurs altitudes dans la zone d'inspection.

Pour discriminer le défaut picot externe par rapport au défaut bavure externe, on analyse l'étendue angulaire d'observation des écarts, en considérant qu'un défaut picot externe est détecté lorsque l'étendue angulaire d'observation des écarts est inférieure à une limite maximale fixée.

Pour discriminer le défaut picot externe par rapport au défaut bavure externe, on analyse l'étendue angulaire d'observation des écarts, en considérant qu'un défaut bavure externe est détecté lorsque l'étendue angulaire d'observation des écarts est supérieure à une limite minimale fixée.

Classiquement, pour chaque récipient ayant un défaut de joint horizontal de moule, on envoie un signal pour éjecter le récipient d'une ligne de fabrication.

Selon une caractéristique avantageuse de mise en œuvre, on assure la rotation du récipient sur lui-même selon l'axe vertical selon au moins un tour de rotation d'une durée maximale de 200ms.

Un autre objet de l'invention est de proposer un dispositif d'inspection mettant en œuvre le procédé conforme à l'invention pour détecter sur la bague de récipients en verre, des défauts du joint horizontal de moule.

### Brève description des dessins

[Fig. 1] La Figure 1 est une vue à grande échelle montrant sur la bague d'un récipient en verre, le joint horizontal de moule et chaque joint vertical de moule.
[Fig. 2] La Figure 2 est une vue schématique en élévation montrant un dispositif de mise en œuvre du procédé conforme à l'invention, de détection sur la bague de récipients en verre de défauts du joint horizontal de moule.
[Fig. 3A-3B] Les Figures 3A-3B sont des vues respectivement latérale du bord de bague et de dessus d'une bague d'un récipient en verre présentant un défaut de joint horizontal de moule de type picot externe.
[Fig. 4A-4B] Les Figures 4A-4B sont des vues respectivement latérale du bord de bague et de dessus d'une bague d'un récipient en verre présentant un défaut de joint horizontal de moule de type bavure externe.
[Fig. 5A-5B] Les Figures 5A-5B sont des vues respectivement latérale du bord de bague et de dessus d'une bague d'un récipient en verre présentant un défaut de joint horizontal de moule de type anneau décalé.
[Fig. 6] La Figure 6 est un exemple d'une image du bord droit d'une bague d'un récipient en verre avec un défaut de joint horizontal de moule.
[Fig. 7] La Figure 7 est un schéma explicitant l'extraction dans une image, du profil du bord d'une bague d'un récipient présentant un défaut de joint horizontal de moule.
[Fig. 8] La Figure 8 est un schéma explicitant l'extraction dans une image, du profil de référence du bord d'une bague à partir d'un récipient conforme.
[Fig. 9] La Figure 9 est un schéma explicitant la comparaison entre le profil du bord d'une bague d'un récipient présentant un défaut de joint horizontal de moule du type bavure externe ou picot externe et du profil de référence du bord d'une bague d'un récipient.
[Fig. 10] La Figure 10 est un schéma explicitant la comparaison entre le profil du bord d'une bague d'un récipient présentant un défaut de joint horizontal de moule du type anneau décalé et du profil de référence du bord d'une bague d'un récipient.
[Fig. 11] La Figure 11 est un schéma explicitant l'extraction dans une image, du profil de référence du bord de bague sous forme d'une droite pour une bague à vis.
[Fig. 12] La Figure 12 est un exemple d'une image du bord droit d'une bague d'un récipient présentant un défaut picot externe, sur laquelle apparait le profil du récipient et un profil de référence.

### Description des modes de réalisation

Tel que cela ressort plus précisément des Figures 1 et 2, l'objet de l'invention concerne un dispositif 1 pour mettre en œuvre un procédé conforme à l'invention pour détecter des défauts du joint horizontal de moule JH sur des récipients R en verre. De manière classique, un récipient R présente un fond F à partir duquel s'élève selon un axe vertical Z, une paroi cylindrique verticale V se terminant par une partie dite de bague B. Dans le cas d'un récipient R du type bouteille, la paroi cylindrique verticale V présente à partir du fond F, une partie formant le corps de la bouteille qui se raccorde à un col C par l'intermédiaire d'une épaule E.

Chaque récipient R comporte comme illustré à la Figure 1, notamment un joint horizontal de moule JH correspondant à l'interface entre la partie de moule appelée anneau et les deux demi-moules formant la paroi cylindrique verticale V du récipient. Par définition, le joint horizontal de moule JH est situé légèrement en dessous de la surface S de bague, correspondant à la surface plane pour l'étanchéité du récipient. Le joint horizontal de moule JH s'étend sur toute la circonférence de la bague.

Conformément à l'invention, le procédé consiste à détecter sur chaque récipient un défaut de joint horizontal de moule JH pris parmi les défauts suivants : picot externe JHK connu également sous la dénomination anglaise (Knock out), bavure externe JHF connu également sous la dénomination anglaise (Flange) et anneau décalé JHO connu également sous la dénomination anglaise (Overhang/Overmatch).

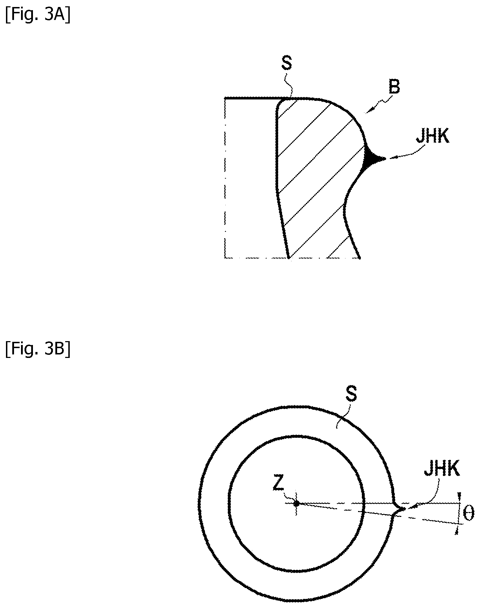

Tel que cela ressort plus précisément des Figures 3A et 3B, un défaut de picot externe JHK correspond à une bavure de verre à l'une des intersections en forme de T du joint horizontal de moule JH et du joint vertical de moule JV entre la partie de moule appelée anneau et les deux demi-moules formant la paroi verticale. Ce défaut correspond à une bavure de verre créée par des arêtes émoussées au niveau de l'interface des trois moules, ou d'un mauvais ajustement entre eux. Ce picot externe JHK prend la forme d'une excroissance de verre en forme de pointe ou d'aiguille (de section souvent triangulaire) avec une faible épaisseur selon la direction de l'axe vertical Z et avec une faible étendue horizontalement, souvent moins d'un millimètre. En conséquence il présente une faible étendue angulaire circonférentielle θ prise autour de l'axe vertical Z. Typiquement, le picot externe JHK présente une faible étendue angulaire circonférentielle θ inférieure à quelques degrés.

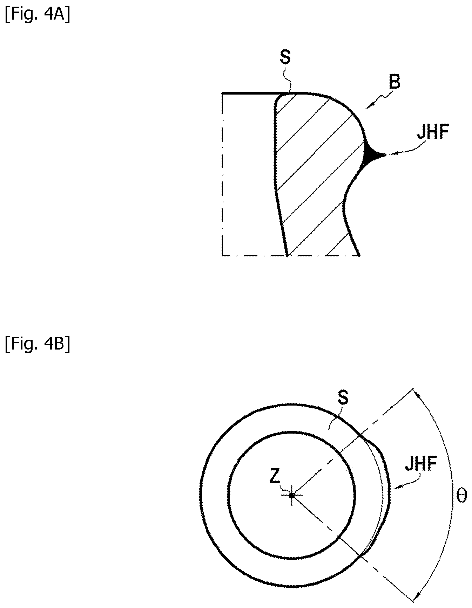

Tel que cela ressort plus précisément des Figures 4A et 4B, un défaut de bavure externe JHF correspond à un excédent de verre consécutif à un mauvais ajustement entre la partie de moule appelée anneau et les deux demi-moules formant la paroi verticale. Cette bavure externe JHF prend la forme d'une lamelle de verre de faible épaisseur selon la direction de l'axe vertical Z. Par ailleurs, cette bavure externe JHF présente une étendue angulaire θ significative prise autour de l'axe vertical Z. Typiquement, la bavure externe JHF présente une étendue angulaire θ significative supérieure ou égale à 10° mais assez facilement supérieure à 30°. Elle peut être largement plus étendue, jusqu'à 180°. Plus rarement, la bavure peut être présente sur toute la circonférence.

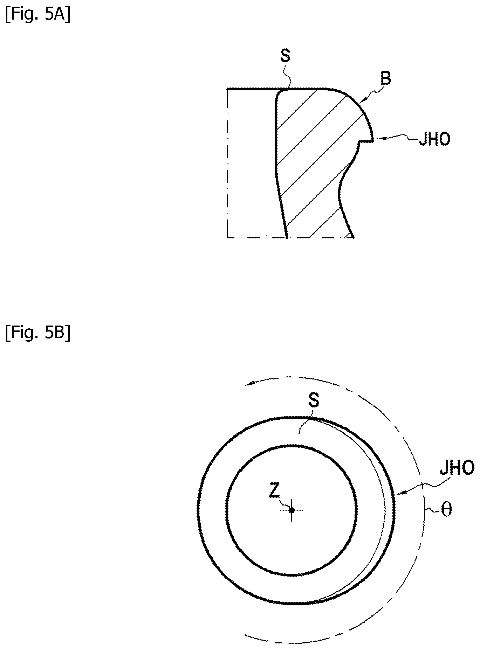

Tel que cela ressort plus précisément des Figures 5A et 5B, un défaut d'anneau décalé JHO correspond à un excédent de verre consécutif à un déplacement de la partie de moule appelée anneau et les deux demi-moules formant la paroi verticale. Cet anneau décalé JHO prend la forme d'une excroissance de verre de forte épaisseur selon la direction de l'axe vertical Z en présentant une significative étendue angulaire θ prise autour de l'axe vertical Z. Typiquement, le décalage de l'anneau peut apparaître sur 180°, mais la marche créée est généralement significative sur une étendue angulaire θ supérieure ou égale à 90°.

Comme cela sera expliqué en détail dans la suite de la description, l'objet de l'invention vise à détecter un récipient présentant un défaut de joint horizontal de moule JH pris parmi l'un et/ou l'autre des défauts picot externe JHK, bavure externe JHF et anneau décalé JHO. Selon une variante avantageuse de réalisation, l'objet de l'invention vise à discriminer un défaut de joint horizontal de moule JH pris parmi les défauts picot externe JHK, bavure externe JHF et anneau décalé JHO.

A cet effet, le dispositif 1 pour la mise en œuvre du procédé de détection des défauts de joint horizontal de moule JH comporte une source lumineuse 3 fixe disposée d'un côté du récipient R et une caméra 4 fixe de prises d'images disposée de l'autre côté du récipient R. Cette caméra 4 qui comporte un objectif 4a est adaptée pour prendre des images dans lesquelles apparait au moins une partie du joint horizontal de moule JH des récipients R. Cette caméra 4 est reliée à une unité d'analyse et de traitement 5 configurée pour analyser les images prises et détecter un défaut de joint horizontal de moule JH des récipients R.

La prise des images d'un récipient R est réalisée alors que le récipient R est mis en rotation sur lui-même selon son axe vertical Z pendant au moins un tour de rotation, ce qui permet à la totalité du joint horizontal de moule JH de défiler devant la caméra. Chaque récipient R est pris en charge par un système de mise en rotation 6. Par exemple, le système de mise en rotation 6 comporte un plan de glisse ou de pose 7 pour le fond F du récipient R ainsi qu'un système d'entraînement 8 de tous types connus en soi. Le système d'entraînement 8 est piloté de manière que chaque récipient R reste entre la source lumineuse 3 et la caméra 4 pendant le temps nécessaire afin d'effectuer au moins un tour sur lui-même pendant lequel des images sont prises par la caméra 4 comme cela sera expliqué dans la suite de la description.

Par exemple, le système de mise en rotation 6 comporte comme système d'entraînement une roue ou tournette 8 entraînant le récipient en rotation par frottement, tandis que le récipient est assujetti en appui sur aux moins deux roulettes libres ou galets 9. Les galets font partie, par exemple, d'une étoile de transport 10, qui transporte les récipients R sur un chemin circulaire, pour les amener successivement en appui et glissement sur un plan de pose 7, devant le dispositif de détection 1. Avantageusement, cette étoile de transport 10 fait partie d'une machine d'inspection, qui inspecte plus de 150 récipients par minute, comportant un ou plusieurs postes d'inspection des récipients défilant en sortie d'une ligne de fabrication. En d'autres termes, le dispositif de détection 1 conforme à l'invention peut être mis en œuvre en complément des postes d'inspection placés classiquement pour inspecter les récipients sur ligne de fabrication, sans réduire la cadence de défilement des récipients dans ces postes qui intègrent une mise en rotation des récipients pour cette inspection.

Selon une caractéristique de l'invention, la machine d'inspection en ligne inspecte entre 50 et 500 récipients par minute, typiquement entre 150 et 450 récipients par minute. Pour chaque récipient, le procédé comporte une étape de transport consistant à apporter le récipient R et disposer le récipient R entre la source lumineuse 3 et la caméra 4 de prise d'images, et une étape pour assurer la rotation du récipient R sur lui-même selon l'axe vertical Z selon au moins un tour de rotation, durant laquelle on acquière les images. Il est à noter qu'avec l'étoile de transport 10, on emporte le récipient inspecté précédemment dans le poste d'inspection en même temps que l'on apporte un nouveau récipient à inspecter. La machine d'inspection en ligne est donc dotée de moyens de manutention à haute cadence. Pour une cadence de 150 récipients par minute, la durée de l'étape de rotation et d'inspection est au maximum de 200 ms. Selon une caractéristique préférée de l'invention, la rotation complète d'un récipient dure au maximum 100ms. Il est également souvent choisi que le récipient effectue 1,5 tours.

Autrement dit, le procédé selon l'invention consiste à disposer le récipient R entre une source lumineuse 3 et une caméra 4 de prise d'images dont l'axe optique d'observation est sensiblement perpendiculaire à un axe parallèle à l'axe vertical Z du récipient et dont le champ de vision comprend au moins le bord gauche de la bague ou le bord droit de la bague, incluant au moins une partie du joint horizontal de moule, à assurer la rotation du récipient R sur lui-même selon l'axe vertical Z selon au moins un tour de rotation en moins de 200 ms, et à acquérir par la caméra 4, à chaque incrément de rotation du récipient, une image de sorte que le nombre d'images par tour de rotation soit supérieur à 36.

Selon une caractéristique de l'invention, la caméra 4 est pilotée de manière qu'à chaque incrément de rotation du récipient, une image est prise de sorte que le nombre d'images par tour de rotation soit supérieur à 36. En d'autres termes, le procédé selon l'invention vise à acquérir au moins une image tous les 10° de rotation du récipient R. Par exemple, le nombre d'images d'un récipient R sur 360° est compris entre 36 et 96. L'incrément de rotation du récipient entre chaque image prise représente un secteur angulaire parcouru par la bague allant par exemple de 10° à moins de 1°. Bien entendu, une caméra rapide avec moins de 500µs de temps d'intégration et un temps de lecture de 0,5ms permettrait d'acquérir 400 images par tour en 200ms. L'augmentation de la fréquence d'acquisition conduit à une plus grande précision notamment dans l'estimation de la longueur radiale d'un picot. Elle a pour conséquence un coût plus élevé du système par le prix d'une caméra 4 rapide et la puissance de calcul que devra posséder l'unité d'analyse et de traitement 5.

Conformément à l'invention, la source lumineuse 3 et la caméra 4 sont adaptées afin que la caméra puisse acquérir, lors de la rotation du récipient autour de son axe vertical Z, des images I dans lesquelles apparait au moins une partie du joint horizontal de moule JH du récipient R. Comme illustré à la Figure 2, il est considéré par convention que l'axe vertical Z du récipient est parallèle à la direction verticale z d'un repère orthogonal x, y, z. Cette direction verticale z est perpendiculaire à la direction transversale y passant par la source lumineuse 3 et la caméra 4 tandis que la direction latérale x est perpendiculaire à la direction transversale y et à la direction verticale z.

Le récipient R est positionné entre la source lumineuse 3 et la caméra 4 dont l'axe optique d'observation Y s'étend parallèlement à la direction transversale y c'est-à-dire selon une direction sensiblement perpendiculaire à la direction verticale z. Cette caméra 4 présente un champ de vision s'étendant latéralement selon la direction latérale x orthogonale à la direction verticale z et à l'axe optique d'observation Y. Le champ de vision de la caméra 4 s'étend donc dans le plan défini par la direction verticale z et la direction latérale x. Selon un exemple préféré, on positionne la caméra 4 de manière que son axe optique soit sensiblement tangent au bord gauche ou droit de la bague.

Selon la direction verticale z, le champ de vision de la caméra 4 comprend au moins le joint horizontal de moule JH. Le champ de vision de la caméra 4 comprend au moins le bord gauche de la bague B ou le bord droit de la bague B. Selon une variante préférée de mise en œuvre, le champ de vision de la caméra 4 comprend pour une bonne résolution, uniquement soit le bord gauche de la bague B soit le bord droit de la bague B. Bien entendu, le procédé selon l'invention peut être mis en œuvre avec une caméra dont le champ de vision ne se limite pas à un bord droit ou gauche. Cette variante préférée est particulièrement adaptée à des hautes cadences, sachant que les machines d'inspection en ligne font tourner les récipients sur au moins un tour et donc l'observation d'un seul côté est suffisante pour garantir l'observation des défauts du joint horizontal de moule JH de bague. Par ailleurs, l'observation d'un seul côté permet d'utiliser de manière optimale le champ d'une caméra et de disposer son axe optique tangent au bord de bague observé.

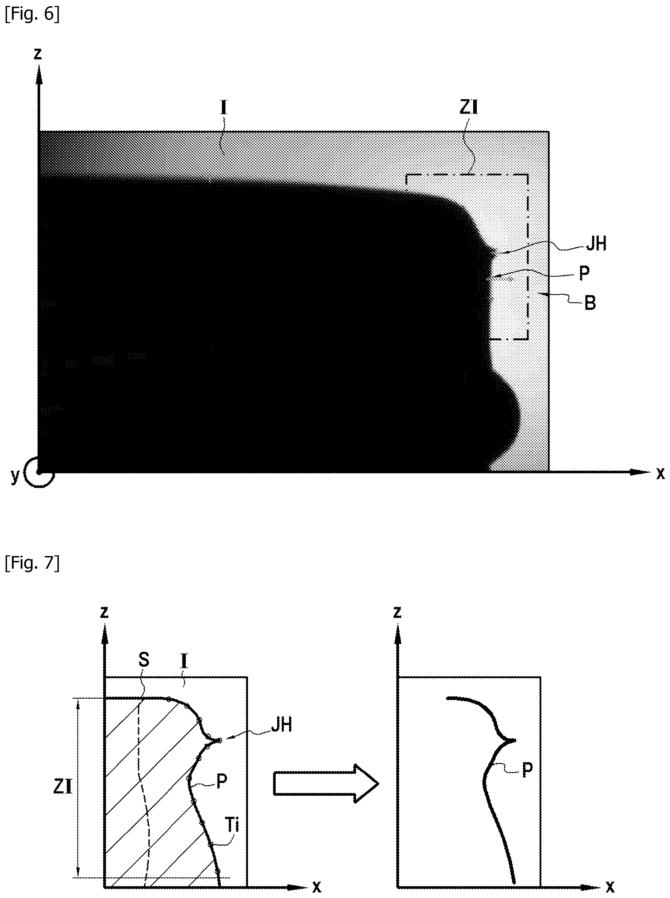

Cette caméra 4 telle qu'une caméra matricielle transmet à l'unité d'analyse et de traitement 5, pour chaque incrément de rotation, une projection horizontale de la bague, dans laquelle se distingue au moins un bord de la bague, appelé bord gauche ou bord droit en considération de leur position apparaissant sur chacune des images prises par la caméra (Figure 6). La qualification gauche ou droite est ainsi donnée du point de vue de l'observation à chaque prise de vue car un récipient de révolution ne comporte pas à proprement dit de côté gauche ou droit. Dans l'exemple illustré à la Figure 6, l'image I correspond à un bord droit du récipient R.

Dans chaque image prise par la caméra apparait ainsi au moins le bord gauche de la bague B ou le bord droit de la bague B permettant de visualiser au moins une partie du joint horizontal de moule JH et au moins le profil P du bord de bague. En d'autres termes et tel que cela ressort de la Figure 6, chaque image I doit comporter sur une altitude ou hauteur prise selon une direction parallèle à la direction verticale z, au moins une partie du contour ou du profil P du bord de bague incluant au moins une partie du joint horizontal de moule JH. Il est ainsi défini dans chaque image, une zone d'inspection ZI correspondant à une bande horizontale de l'image présentant une hauteur déterminée pour inclure une partie du profil P du bord de bague comportant une partie du joint horizontal de moule JH.

Selon une caractéristique avantageuse de mise en œuvre, on dispose la caméra 4 de manière que son champ de vision comprend au moins une partie du joint horizontal de moule JH et une référence dont la position en altitude est connue par rapport au joint horizontal de moule JH. Il est ainsi possible, après avoir trouvé ladite référence dans les images, de positionner la zone d'inspection ZI de la bague par rapport à la référence de manière que la zone d'inspection de la bague s'étend sur une hauteur incluant à coup sûr le joint horizontal de moule.

Bien entendu, cette prise d'images est réalisée avec en plus une marge pour visualiser cette référence et une partie du joint horizontal de moule JH tout en tenant compte des dispersions de positionnement des récipients R par rapport à la caméra 4 et des tolérances de fabrication des récipients R. Cette marge est par exemple d'au moins +/- 2 mm lorsque la hauteur des récipients peut varier de +/- 2mm.

Il doit être compris que cette référence présentée par les récipients R est un élément remarquable comme par exemple, un contour, un angle, une forme pouvant être localisé dans les images. Cet élément remarquable est également visible dans toutes les images prises durant la rotation de l'article sur un tour, et sa position verticale dans chaque image est déterminable de manière univoque, sa distance verticale Dv au joint horizontal de moule JH étant connue dans chaque image, donc de préférence cette distance est constante. La localisation de cette référence dans les images permet d'attribuer un référentiel de position à chacune des images, utilisable dans l'analyse des images.

Typiquement, en tant que référence, il peut être pris par exemple tout ou partie de la surface S de bague ou de la contre bague CB lorsqu'un récipient en comporte. Dans le cas où la surface de bague S est prise comme référence, la caméra 4 est réglée de manière que la hauteur de son champ de vision inclut la surface de bague S plus une marge pour tenir compte des dispersions de positionnement et des tolérances de fabrication des récipients. De même, la caméra 4 est réglée de manière que la hauteur de son champ de vision inclut le joint horizontal de moule JH plus une marge.

La largeur horizontale du champ de vision de la caméra 4 est adaptée pour inclure le profil P du bord de bague avec une marge et la référence à savoir une partie de la surface de bague dans l'exemple considéré. Selon une variante préférée, la largeur du champ est choisie pour inclure uniquement un bord de bague plus les marges nécessaires. Par exemple, la caméra 4 possède une largeur horizontale du champ de vision de préférence comprise entre 5mm et 80mm et une hauteur du champ de vison comprise entre 3mm et 20mm. Ceci permet d'optimiser le champ de la caméra, c'est-à-dire de limiter les zones inutiles du capteur. Selon une autre variante, les deux bords gauche et droit de la bague sont inclus dans le champ de vison, et la largeur de champ peut atteindre 130mm pour observer des bagues de 120mm de diamètre et une marge de 10mm.

Par exemple, la caméra 4 est une caméra matricielle combinée à un objectif optique, l'ensemble permettant d'observer la zone d'inspection avec une résolution supérieure à 25 pixels/mm.

La source lumineuse 3 est réalisée de toute manière appropriée pour assurer un rétroéclairage du récipient R adapté pour la prise des images par la caméra 4.

Selon une caractéristique préférée de réalisation, la source lumineuse 3 présente des dimensions verticale et horizontale d'illumination déterminées. Par convention, la dimension verticale est prise selon la direction verticale z tandis que sa dimension horizontale est parallèle à la direction latérale x. Dans un système optique non télécentrique, le dimensionnement DL de la source lumineuse 3 est du type :
DL= CH x DI / DC ; avec CH, champ de vision de la caméra 4, DI distance entre la source lumineuse 3 et l'objectif 4a de la caméra, DC distance entre la zone inspectée et l'objectif de la caméra en considérant plus précisément la distance DC comme la distance entre l'objectif de la caméra (par exemple le centre optique d'un objectif non télécentrique) et le plan de mise au point contenant l'axe vertical Z du récipient et le point de tangence avec le bord de la bague d'un rayon optique passant par le centre optique. Les dimensions verticale et horizontale d'illumination sont les dimensions de la zone utile de la source lumineuse 3 observable par la caméra 4.

Selon une caractéristique de réalisation, la source lumineuse 3 présente des dimensions verticale et horizontale d'illumination comprises entre 100% et 200% et de préférence 120% des dimensions du champ de vision de la caméra 4 multipliées par la distance entre la source lumineuse 3 et l'objectif 4a de la caméra et divisée par la distance entre l'axe vertical Z des récipients et l'objectif 4a de la caméra.

Selon une variante de réalisation, la source lumineuse 3 peut être une source lumineuse télécentrique dont le champ illuminé présente des dimensions supérieures ou égales aux dimensions du champ de vision de la caméra 4. La source lumineuse 3 génère ainsi pour le champ de vision de la caméra, un faisceau dont les rayons moyens sont parallèles à l'axe optique de la caméra. Dans ce cas, il est à noter que l'objectif 4a de la caméra est un objectif télécentrique.

Les images prises par la caméra 4 pour chaque récipient R sont analysées par l'unité d'analyse et de traitement 5 configurée pour détecter un défaut de joint horizontal de moule JH des récipients R. La méthode pour détecter un défaut de joint horizontal de moule JH consiste à analyser pour chaque récipient, les images prises et en particulier dans chaque image, la zone d'inspection ZI de la bague sur une hauteur de la bague incluant au moins une partie du joint horizontal de moule. Cette méthode d'analyse consiste à détecter dans la zone d'inspection des images, le profil P du bord de bague et à comparer les profils P du bord de bague des images avec un profil de référence Pf du bord de bague, de manière à détecter des écarts entre ces profils P du bord de bague et le profil de référence Pf du bord de bague. Un défaut de joint horizontal de moule pour un récipient est détecté lorsqu'au moins une image du récipient R présente un écart. Pour chaque récipient ayant un défaut de joint horizontal de moule JH, l'unité d'analyse et de traitement 5 envoie un signal informant de la qualité défectueuse du récipient, un tel signal pouvant commander un éjecteur pour éjecter le récipient de la ligne de fabrication.

La détection du profil P du bord de bague dans chacune des images prises peut être réalisée par toutes méthodes de traitement d'images appropriées.

Comme expliqué ci-dessus, l'analyse des images est de préférence limitée à la zone d'inspection ZI de la bague dans laquelle apparait une partie du profil de bague P comportant le joint horizontal de moule. Avantageusement, on positionne la zone d'inspection par rapport à une référence du récipient apparaissant dans l'image et dont la position en altitude est connue par rapport au joint horizontal de moule. Cette variante de mise en œuvre limite l'analyse du profil de bague à la portion juste nécessaire pour caractériser le joint horizontal de moule tout en éliminant les parties de profil autres, susceptibles d'être confondues avec un joint horizontal de moule, telles que celles incluant un filet par exemple.

Selon cette méthode, on recherche dans chaque image, la référence dont la position en altitude est connue par rapport au joint horizontal de moule et on positionne la zone d'inspection de la bague par rapport à la référence de manière que la zone d'inspection de la bague s'étend sur une hauteur incluant nécessairement le joint horizontal de moule JH.

La Figure 7 illustre à titre d'exemple la détection du profil P du bord droit d'une bague dans une image I dans laquelle apparait comme référence, la surface de bague S. La première étape consiste à localiser en hauteur c'est-à-dire selon la direction verticale z, la position de la surface de bague S. Par exemple, selon une ligne verticale qui suit le bord gauche de l'image, on détecte une transition verticale de niveau de gris correspondant à la surface de bague S. Il est alors possible de positionner la zone d'inspection ZI à partir de cette référence de manière que l'inspection de l'image puisse nécessairement prendre en compte le joint horizontal de moule JH.

Bien entendu, la méthode de recherche de la référence peut être différente. Par exemple, dans le cas où la référence est la contre-bague, il peut être mis en œuvre une recherche du maximum de corrélation bidimensionnelle entre l'image et une fenêtre de référence contenant un modèle appris de la contre bague ou du bord visible droit ou gauche de la contre bague.

La deuxième étape consiste à extraire le contour externe ou le profil du bord de bague P depuis par exemple, la surface de bague S jusqu'à la limite inférieure de la zone d'inspection ZI située au-dessous de la surface de bague et au-delà du joint horizontal de moule ZH. Comme illustré à la Figure 7, le profil du bord de bague P comporte le joint horizontal de moule JH. La recherche d'un premier point de profil du bord de bague P peut consister à parcourir l'image horizontalement, à une hauteur donnée relativement à la référence, jusqu'à détecter une transition horizontale de niveau de gris.

L'extraction dans chaque image, du profil du bord de bague P peut être réalisée à l'aide de toutes méthodes de traitement d'images. Par exemple, il peut être prévu dans la zone d'inspection ZI, de rechercher pour chaque altitude prise selon la direction verticale z, le bord extérieur de la bague en recherchant une transition Ti noire/blanche ou à partir de l'extérieur, une transition blanche/noire. La position de cette transition Ti selon la direction latérale x est déterminée par rapport à la direction verticale z. La recherche de cette transition Ti est effectuée à chaque altitude et sur toute la hauteur de la zone d'inspection ZI. Comme illustré sur la droite de la Figure 7, pour chaque image, il peut être obtenu le profil du bord de bague P sous la forme d'une courbe référencée dans le plan z, x. Par exemple le profil P est constitué de l'ensemble des transitions Ti, dont on connaît pour chacune les coordonnées x et z.

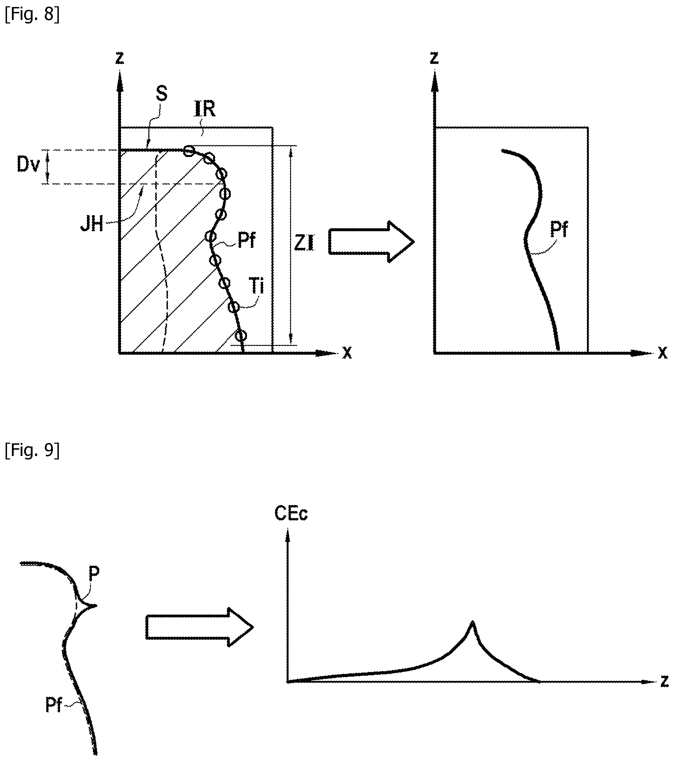

L'étape suivante consiste à comparer le profil du bord de bague P avec un profil de référence Pf du bord de bague, obtenu par différents moyens possibles. Selon une variante préférée de l'invention, tel que cela ressort de la Figure 8, l'extraction du profil de référence Pf du bord de bague est réalisée de manière analogue à l'extraction du profil du bord de bague P d'un récipient illustrée à la Figure 7. A cet effet, pour un récipient de référence comportant un profil de référence Pf du bord de bague incluant une partie d'un joint horizontal de moule de référence sans défaut, une image est prise permettant de visualiser ce profil de référence Pf du bord de bague et en tant que référence, la surface de bague. Cette image de référence est avantageusement réalisée dans les mêmes conditions que les images pour les récipients à inspecter, à l'aide du dispositif d'inspection en positionnant le récipient de référence entre la caméra 4 et la source lumineuse 3. L'analyse de cette image selon la méthode décrite ci-dessus permet d'extraire le profil de référence de bord de bague Pf et dans lequel apparaît le joint horizontal de moule sans défaut.

Selon une autre variante de réalisation, le profil de référence Pf du bord de bague est obtenu par apprentissage à partir de plusieurs images d'un récipient, ou bien d'images de plusieurs récipients jugés conformes. Par exemple une opération mathématique de tout type peut être réalisée sur les images ou sur des profils extraits d'images. Ainsi, en tant que profil de référence Pf, il peut être choisi un profil ou plusieurs profils obtenus sur un récipient de référence jugé conforme ou sur plusieurs récipients de référence jugés conformes. De même, en tant que profil de référence Pf, il peut être choisi un profil moyen calculé sur plusieurs incréments de rotation d'un récipient de référence jugé conforme ou de plusieurs récipients de référence jugés conformes. Selon une autre variante de réalisation, le profil de référence Pf du bord de bague peut être obtenu également à partir d'un plan de fabrication ou de tous modèles géométriques de récipients.

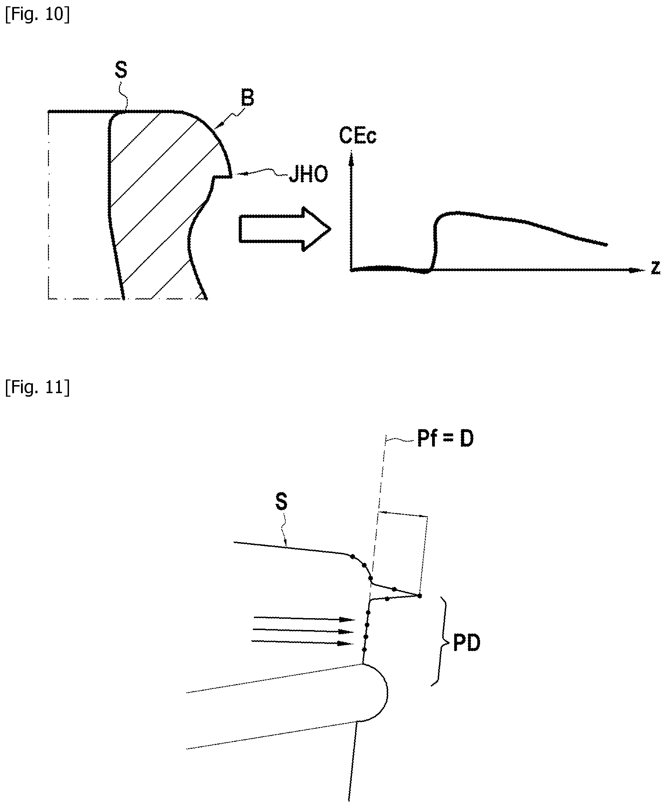

Selon une autre variante de l'invention illustrée à la Figure 11, dans le cas par exemple de bagues à vis comme illustré à la Figure 1, le bord de bague comporte une portion cylindrique, et donc le profil du bord de bague comporte une portion droite PD. Dans ce cas, le profil de référence Pf du bord de bague peut être une simple droite de référence D passant au mieux par la partie droite PD du profil du bord de bague P, donc par les points Ti de cette partie du contour de bague, ou une droite parallèle à celle-ci.

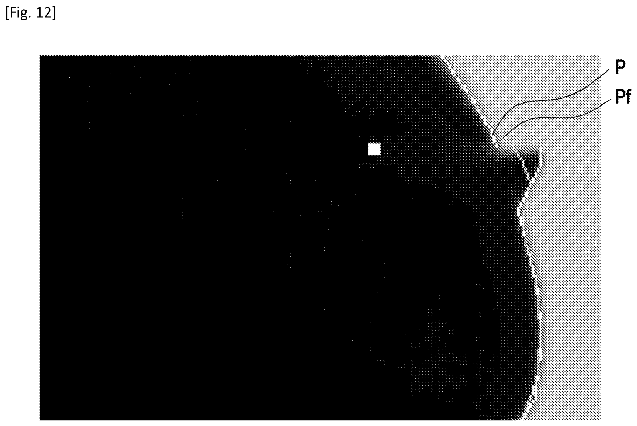

Selon une autre variante de réalisation illustrée à la figure 12, l'invention vise à utiliser en tant que profil de référence Pf, un profil du bord de bague auquel est appliqué un filtre passe-bas. En d'autres termes, le profil de référence Pf correspond au profil du bord de bague auquel est appliqué un filtrage ou un lissage. A titre d'exemple à la figure 12, le profil P du bord de bague (en blanc) correspond au profil brut extrait sur l'image tandis que le profil de référence Pf (en gris) correspond à la moyenne mobile du profil P. Bien entendu, il peut être appliqué différents types de filtre passe-bas, comme par exemple, moyenneur, gaussien, médian ou médian à phase décalée.

Selon une autre variante de réalisation, il est à noter qu'il peut être envisagé d'appliquer un filtre passe-haut sur les profils du bord de bague, pour comparer les profils du bord de bague P des images avec un profil de référence Pf du bord de bague. L'application d'un filtre passe-haut par exemple de type gradient permet de mettre en évidence des écarts c'est-à-dire des fortes variations ou des variations rapides de la dérivée du profil de bord de bague, traduisant la présence d'une irrégularité locale. La présence de tels écarts correspond à un défaut de joint horizontal de moule.

L'étape de comparaison pour chaque image, entre le profil du bord de bague P d'une image et le profil de référence Pf du bord de bague conduit à détecter s'il existe des écarts entre ces profils du bord de bague et le profil de référence du bord de bague. Un défaut de joint horizontal de moule pour un récipient est détecté lorsqu'au moins une image dudit récipient présente un écart.

Cette comparaison conduisant à la constatation ou non d'un défaut de joint horizontal de moule peut être mise en œuvre selon diverses méthodes d'analyse.

Pour chaque image, on compare pour au moins plusieurs altitudes et de préférence pour toutes les altitudes dans la zone d'inspection ZI, le profil du bord de bague P et le profil de référence du bord de bague Pf. Cette étape vise à comparer au moins une mesure d'aire, d'amplitude et/ou de pente à un seuil et un écart est détecté lorsqu'au moins une de ces mesures dépasse ce seuil. Typiquement, une mesure d'aire peut correspondre à l'aire entre le profil du bord de bague P et le profil de référence Pf du bord de bague. Une mesure d'amplitude peut correspondre à une différence entre le profil du bord de bague P et le profil de référence Pf du bord de bague, prise selon la direction latérale x. Une mesure de pente peut correspondre à une mesure de la pente de la courbe obtenue par soustraction du profil du bord de bague P et du profil de référence Pf du bord de bague. Une autre mesure possible est la différence entre deux amplitudes du profil du bord de bague P et du profil de référence Pf du bord de bague, prises à des altitudes égales ou différentes.

Selon une variante de réalisation, pour comparer le profil du bord de bague P et du profil de référence Pf du bord de bague, on prend en compte la position réelle du bord de bague, y compris une inclinaison dans l'image liée à l'inclinaison de la bague par rapport à l'axe Z, en raison des aléas de manutention durant le contrôle, ou bien d'un défaut de verticalité du récipient. Une telle inclinaison de la bague est par exemple illustrée à la Figure 11. Il est à noter que dans le cas où le profil de référence du bord de bague Pf est une droite D passant par la partie droite PD du profil de bague, on peut dans cette variante simplifiée déterminer un écart par la mesure de la distance des points du profil de bague P à la droite de référence D.

Dans l'exemple illustré à la Figure 9, la courbe CEc est la courbe correspondant à l'écart entre le profil du bord de bague P et le profil de référence du bord de bague Pf, cette courbe évoluant selon l'axe vertical z c'est-à-dire en fonction de l'altitude dans la zone d'inspection. Différents exemples de mesures possibles de la courbe d'écart CEc permettent d'estimer la taille de l'écart et/ou sa forme, et par la même d'estimer la présence d'un défaut, éventuellement son type et sa dangerosité. Il peut par exemple être pris en compte le point d'amplitude maximale de cette courbe correspondant à l'extrémité d'une protubérance la plus éloignée de l'axe vertical Z du récipient. Cette amplitude maximale correspond à la hauteur du pic de la courbe d'écart CEc, qui donne une estimation correcte de la longueur radiale du picot ou de la bavure, ce qui constitue un très bon critère physique de dangerosité du défaut. Cette amplitude peut être comparée à une valeur de seuil et un écart (ou défaut) est détecté si cette mesure dépasse ce seuil.

Le seuil peut être réglable afin de paramétrer la sévérité de l'inspection, par exemple l'opérateur peut ainsi décider que des picots peu marqués sont tolérés.

Si la mesure permettant la détection d'un écart est l'aire d'une surface obtenue par soustraction du profil du bord de bague et du profil de référence de bord de bague, la mesure est par exemple l'intégrale de la courbe d'écart CEc. Si la mesure est une pente, ce peut être la pente maximale de la courbe d'écart CEc, ou bien un écart entre deux pentes successives de la courbe d'écart CEc de part et d'autre d'un pic ou d'un franchissement de seuil.

Il ressort de la description qui précède que le procédé selon l'invention consiste à détecter au moins un défaut de joint horizontal de moule JH pris parmi les défauts suivants : picot externe JHK, bavure externe JHF et anneau décalé JHO.

Selon une variante avantageuse de réalisation, le procédé selon l'invention permet de discriminer les défauts détectés parmi ces trois défauts, à savoir picot externe JHK, bavure externe JHF et anneau décalé JHO. A cet effet, on définit pour chaque défaut à savoir, picot externe, bavure externe et anneau décalé, au moins un critère de détection et on utilise au moins un de ces critères de détection pour distinguer les défauts entre eux. Il apparait ainsi possible d'identifier le type de défaut permettant d'affiner l'inspection des récipients.

Selon un exemple de réalisation, on choisit comme critère de détection, pour au moins une image, la forme des écarts détectés pour plusieurs altitudes dans la zone d'inspection. Par exemple, la forme d'un écart peut être décrite de différentes manières comme par exemple au moyen de mesures de pentes ou d'amplitudes, prises selon plusieurs altitudes consécutives. Cette forme peut s'observer sur la courbe d'écart CEc. Sur la Figure 9, la courbe d'écart CEc présente un pic, caractérisant un picot externe ou une bavure externe, mais si le défaut est un anneau décalé comme Figure 5A, la courbe d'écart CEc aura une forme d'échelon comme illustré à la Figure 10.

Selon un autre exemple de réalisation, on choisit comme critère de détection, l'étendue angulaire d'observation des écarts correspondant au nombre d'images successives dans lesquelles un écart est détecté, c'est-à-dire à l'angle de rotation du récipient durant lequel l'écart est détecté dans les images. L'étendue angulaire d'observation des écarts pour un défaut de type bavure externe ou anneau décalé est très proche de l'étendue angulaire circonférentielle du défaut vu de dessus comme cela apparaît clairement sur les Figures 3B, 4B et 5B. Pour un picot externe, l'étendue angulaire d'observation est supérieure à son étendue angulaire circonférentielle. Si par exemple l'incrément de rotation entre deux acquisitions d'images est de 4°, et un picot externe présente une très petite étendue angulaire circonférentielle de 2°, et s'il est suffisamment long, alors il peut être visible dans plusieurs images successives, respectivement deux ou trois, séparées dans le temps d'un ou plusieurs incréments de rotation, et donc son étendue angulaire d'observation est respectivement de 8° ou 12°.

Bien entendu, chacun de ces critères peut être mis en œuvre indépendamment l'un de l'autre ou en combinaison l'un après l'autre, l'un de ces critères pouvant être appliqué avant l'autre et inversement.

Selon un exemple de mise en œuvre, on analyse la forme des écarts détectés pour plusieurs altitudes dans la zone d'inspection pour discriminer le défaut anneau décalé JHO par rapport aux défauts, picot externe JHK et bavure externe JHF. En effet, comme cela ressort clairement de la Figure 5A, le défaut anneau décalé JHO se distingue notamment par sa forme en échelon ou créneau par rapport aux défauts picot externe (Figure 3A) et bavure externe (Figure 4A) qui se caractérisent par une protubérance pointue.

Selon un autre exemple de mise en œuvre, on analyse l'étendue angulaire d'observation des écarts pour discriminer le défaut picot externe JHK par rapport au défaut bavure externe JHF, en considérant qu'un défaut picot externe est détecté lorsque l'étendue angulaire d'observation des écarts est inférieure à une limite maximale, fixée par exemple à 30°. En d'autres termes, un défaut picot externe JHK est détecté lorsque le nombre d'images successives dans lesquelles un écart est détecté correspond à une étendue angulaire d'observation inférieure à la limite maximale fixée par exemple à 30°.

Selon un autre exemple de mise en œuvre, on analyse l'étendue angulaire d'observation des écarts pour discriminer le défaut picot externe JHK par rapport au défaut bavure externe JHF, en considérant qu'un défaut bavure externe est détecté lorsque l'étendue angulaire d'observation des écarts est supérieure à une limite minimale fixée par exemple à 30°. En d'autres termes, un défaut bavure externe JHF est détecté lorsque le nombre d'images successives dans lesquelles un écart est détecté correspond à une étendue angulaire d'observation supérieure à la limite minimale fixée par exemple à 30°.

Selon l'invention, les seuils appliqués aux mesures pour détecter les écarts, les critères de discrimination tels que ceux employés soit dans la comparaison des formes de profils, et/ou ceux employés comme valeurs minimales ou maximales d'étendue angulaire d'observation, sont mémorisés dans l'unité d'analyse et de traitement 5, et de préférence réglables par un opérateur en fonction des récipients inspectés et des qualités requises.

## Revendications

1. Procédé pour détecter sur la bague (B) de récipients (R) en verre présentant chacun un axe vertical (Z), des défauts du joint horizontal (JH) de moule, le procédé comprenant pour la détection de défauts pour chaque récipient, les étapes suivantes :
- disposer le récipient (R) entre une source lumineuse (3) et une caméra (4) de prise d'images dont l'axe optique d'observation est sensiblement perpendiculaire à un axe parallèle à l'axe vertical (Z) du récipient et dont le champ de vision comprend au moins le bord gauche de la bague ou le bord droit de la bague, incluant au moins une partie du joint horizontal de moule ;
- assurer la rotation du récipient (R) sur lui-même selon l'axe vertical (Z) selon au moins un tour de rotation ;
- acquérir par la caméra (4), à chaque incrément de rotation du récipient, une image de sorte que le nombre d'images par tour de rotation soit supérieur à 36 ;
- analyser pour chaque récipient, les images prises de manière que :
* on définit dans les images, une zone d'inspection (ZI) de la bague sur une hauteur de la bague incluant au moins une partie du joint horizontal de moule ;
* on détecte dans la zone d'inspection des images, le profil du bord de bague (P) ;
* on compare les profils du bord de bague (P) des images avec un profil de référence (Pf) du bord de bague, de manière à détecter des écarts entre ces profils du bord de bague et le profil de référence du bord de bague ;
* et on détecte un défaut de joint horizontal de moule (JH) pour un récipient lorsqu'au moins une image dudit récipient présente un écart.

2. Procédé selon la revendication 1, selon lequel on dispose la caméra (4) de manière que le champ de vision comprend au moins une partie du joint horizontal de moule (JH) et une référence dont la position en altitude est connue par rapport au joint horizontal de moule et en ce que pour définir dans les images, la zone d'inspection (ZI) de la bague, on recherche la référence dont la position en altitude est connue par rapport au joint horizontal de moule, et on positionne la zone d'inspection (ZI) de la bague par rapport à la référence de manière que la zone d'inspection de la bague s'étend sur une hauteur incluant le joint horizontal de moule.

3. Procédé selon la revendication 2, selon lequel on recherche dans les images en tant que référence, tout ou partie de la surface de bague (S) ou de la contre bague (CB).

4. Procédé selon l'une des revendications précédentes, selon lequel on dispose d'une caméra (4) de prise d'images dont la largeur horizontale du champ de vision est comprise entre 5mm et 130mm et la hauteur du champ de vison est comprise entre 3mm et 20mm.

5. Procédé selon l'une des revendications précédentes, selon lequel on dispose d'une caméra (4) de prise d'images présentant une résolution supérieure à 25 pixels/mm.

6. Procédé selon l'une des revendications précédentes, selon lequel on positionne la caméra (4) de prise d'images de manière que son axe optique d'observation (Y) soit sensiblement tangent au bord gauche ou droit de la bague.

7. Procédé selon l'une des revendications précédentes, selon lequel on dispose d'une caméra (4) munie d'un objectif télécentrique.

8. Procédé selon l'une des revendications précédentes, selon lequel on dispose d'une source lumineuse (3) présentant des dimensions verticale et horizontale d'illumination comprises entre 100% et 200% et de préférence 120% des dimensions du champ de vision de la caméra (4) multipliées par la distance entre la source lumineuse et l'objectif (4a) de la caméra et divisée par la distance entre l'axe des récipients et l'objectif de la caméra.

9. Procédé selon l'une des revendications précédentes, selon lequel on dispose d'une source lumineuse télécentrique dont le champ illuminé présente des dimensions supérieures ou égales aux dimensions du champ de vision de la caméra.

10. Procédé selon l'une des revendications précédentes selon lequel on compare les profils du bord de bague (P) des images avec un profil de référence (Pf) du bord de bague, en utilisant en tant que profil de référence (Pf), au moins un profil obtenu sur au moins un récipient de référence jugé conforme, de manière à détecter des écarts.

11. Procédé selon l'une des revendications 1 à 9 selon lequel on compare les profils du bord de bague (P) des images avec un profil de référence (Pf) du bord de bague, en utilisant en tant que profil de référence (Pf), un profil moyen calculé sur plusieurs incréments de rotation d'au moins un récipient de référence jugé conforme, de manière à détecter des écarts.

12. Procédé selon l'une des revendications précédentes selon lequel on compare les profils du bord de bague (P) des images avec un profil de référence (Pf) du bord de bague, en utilisant en tant que profil de référence (Pf), un profil du bord de bague auquel est appliqué un filtre passe-bas, de manière à détecter des écarts.

13. Procédé selon l'une des revendications 1 à 9 selon lequel on compare les profils du bord de bague (P) des images avec un profil de référence (Pf) du bord de bague, en appliquant un filtre passe-haut sur les profils du bord de bague, de manière à détecter des écarts.

14. Procédé selon l'une des revendications précédentes, selon lequel pour chaque image, on compare pour au moins plusieurs altitudes dans la zone d'inspection (ZI), le profil du bord de bague (P) et le profil de référence du bord de bague (Pf), en comparant au moins une mesure d'aire, d'amplitude et/ou de pente à un seuil et on détecte un écart lorsqu'au moins une de ces mesures dépasse ce seuil.

15. Procédé selon l'une des revendications précédentes, selon lequel le procédé consiste à détecter au moins un défaut de joint horizontal de moule (JH) pris parmi les défauts suivants : picot externe (JHK), bavure externe (JHF) et anneau décalé (JHO).

16. Procédé selon l'une des revendications précédentes, selon lequel on définit pour chaque défaut suivant à savoir, picot externe (JHK), bavure externe (JHF) et anneau décalé (JHO), au moins un critère de détection et en ce que le procédé consiste à discriminer les défauts détectés parmi ces trois défauts en utilisant au moins un de ces critères de détection.

17. Procédé selon la revendication précédente, selon lequel on choisit comme critère de détection, pour au moins une image, la forme des écarts détectés pour plusieurs altitudes dans la zone d'inspection.

18. Procédé selon l'une des revendications 16 ou 17, selon lequel on choisit comme critère de détection, l'étendue angulaire d'observation des écarts correspondant au nombre d'images successives dans lesquelles un écart est détecté.

19. Procédé selon la revendication 17, selon lequel on analyse la forme des écarts détectés pour plusieurs altitudes dans la zone d'inspection pour discriminer le défaut anneau décalé (JHO) par rapport aux défauts, picot externe (JHK) et bavure externe (JHF).

20. Procédé selon l'une des revendications 16 à 19, selon lequel on analyse l'étendue angulaire d'observation des écarts pour discriminer le défaut picot externe (JHK) par rapport au défaut bavure externe (JHF), en considérant qu'un défaut picot externe est détecté lorsque l'étendue angulaire d'observation des écarts est inférieure à une limite maximale fixée.

21. Procédé selon l'une des revendications 16 à 20, selon lequel on analyse l'étendue angulaire d'observation des écarts pour discriminer le défaut picot externe (JHK) par rapport au défaut bavure externe (JHF), en considérant qu'un défaut bavure externe est détecté lorsque l'étendue angulaire d'observation des écarts est supérieure à une limite minimale fixée.

22. Procédé selon l'une des revendications précédentes, selon lequel pour chaque récipient ayant un défaut de joint horizontal de moule, on envoie un signal pour éjecter le récipient d'une ligne de fabrication.

23. Procédé selon l'une des revendications précédentes, selon lequel on assure la rotation du récipient (R) sur lui-même selon l'axe vertical (Z) selon au moins un tour de rotation d'une durée maximale de 200ms.

24. Dispositif d'inspection apte à mettre en œuvre un procédé conforme à l'une des revendications précédentes, pour détecter sur la bague de récipients en verre, des défauts du joint horizontal de moule (JH).

## Patentansprüche

1. Ein Verfahren zum Erkennen von Fehlern in der horizontalen Formnaht (JH) auf der Ausrüstung (B) von Glasbehältern (R) mit jeweils einer vertikalen Achse (Z), wobei das Verfahren zur Detektion von Defekten für jeden Behälter folgende Schritte umfasst :
- Anordnen des Behälters (R) zwischen einer Lichtquelle (3) und einer Bilderfassungskamera (4), deren optische Beobachtungsachse im Wesentlichen senkrecht zu einer Achse parallel zur Hochachse (Z) des Behälters ist und deren Sichtfeld zumindest den linken Rand der Appretur oder den rechten Rand des Mündung umfasst, einschliesslich zumindest eines Teils der horizontalen Formnaht;
- Sicherstellen der Drehung des Behälters (R) auf sich selbst entlang der vertikalen Achse (Z) gemäss mindestens einer Rotationsumdrehung;
- Erfassen, durch die Kamera (4), bei jedem Inkrement der Drehung des Behälters, so dass die Anzahl der Bilder pro Rotationsumdrehung grösser als 36 ist;
- Analysieren für jeden Behälter, wobei die Bilder so aufgenommen werden, dass :
* eine Mündung-Inspektionszone (ZI) über eine Höhe des Mündung einschliesslich zumindest eines Teils der horizontalen Formnaht in den Bildern definiert wird;
* das Profil (P) der Mündungskante in der Bildinspektionszone erfasst wird;
* die Profile der Mündungskante (P) der Bilder mit einem Referenzprofil (Pf) der Mündungskante verglichen werden, um Abweichungen zwischen diesen Profilen der Mündungskante und dem Referenzprofil der Abschlusskante zu erfassen;
* und ein Defekt in der horizontalen Formnaht (JH) für einen Behälter erfasst wird, wenn mindestens ein Bild des Behälters eine Abweichung aufweist.

2. Das Verfahren nach Anspruch 1, wobei die Kamera (4) derart angeordnet ist, dass das Sichtfeld zumindest einen Teil der horizontalen Formnaht (JH) und eine Referenz umfasst, deren Höhenlage relativ zur horizontalen Formnaht bekannt ist, und dass zur Definition der Mündung-Inspektionszone (ZI) in den Bildern die Referenz, deren Höhenlage relativ zur horizontalen Formnaht bekannt ist, gesucht wird und die Mündung-Inspektionszone (ZI) relativ zu der Referenz so positioniert wird, dass sich die Mündung-Inspektionszone über eine Höhe mit der horizontalen Formnaht erstreckt.

3. Das Verfahren nach Anspruch 2, wobei alle oder ein Teil der Mündung (S) - oder GegenMündung (CB) - Oberfläche in den Bildern als Referenz gesucht wird.

4. Verfahren nach einem der vorhergehenden Ansprüche, wobei eine Bildaufnahmekamera (4) mit der horizontalen Breite des Sichtfeldes zwischen 5 mm und 130 mm und mit der Höhe des Sichtfeldes zwischen 3 mm und 20 mm liegt.

5. Verfahren nach einem der vorhergehenden Ansprüche, wobei eine Bilderfassungskamera (4) mit einer Auflösung grösser als 25 Pixel/mm vorhanden ist.

6. Verfahren nach einem der vorhergehenden Ansprüche, wobei die Bilderfassungskamera (4) so positioniert ist, dass ihre optische Beobachtungsachse (Y) im Wesentlichen tangential zur linken oder rechten Kante der Mündung ist.

7. Verfahren nach einem der vorhergehenden Ansprüche, wobei eine Kamera (4) mit einer telezentrischen Linse vorgesehen ist.

8. Verfahren nach einem der vorhergehenden Ansprüche, wobei eine Lichtquelle (3) mit vertikalen und horizontalen Beleuchtungsdimensionen zwischen 100% und 200% und vorzugsweise 120% der Abmessungen des Sichtfelds der Kamera (4) multipliziert mit dem Abstand zwischen der Lichtquelle und der Linse (4a) der Kamera und dividiert durch den Abstand zwischen der Achse der Behälter und der Linse der Kamera vorhanden ist.

9. Verfahren nach einem der vorhergehenden Ansprüche, wobei es eine telezentrische Lichtquelle gibt, deren beleuchtetes Feld Abmessungen aufweist, die grösser oder gleich den Abmessungen des Sichtfeldes der Kamera sind.

10. Verfahren nach einem der vorhergehenden Ansprüche, wobei die Profile (P) der Mündungskante der Bilder mit einem Referenzprofil (Pf) der Mündungskante verglichen werden, indem als Referenzprofil (Pf) mindestens ein Profil verwendet wird, das auf mindestens einem Referenzbehälter erhalten wird, der als nachgiebig angesehen wird, um Abweichungen zu erfassen.

11. Verfahren nach einem der Ansprüche 1 bis 9, wobei die Profile (P) der Mündungskante der Bilder mit einem Referenzprofil (Pf) der Mündungskante verglichen werden, indem als Referenzprofil (Pf) ein durchschnittliches Profil verwendet wird, das über mehrere Inkremente der Drehung mindestens eines Referenzbehälters berechnet wird, der als nachgiebig angesehen wird, um Abweichungen zu erfassen.

12. Verfahren nach einem der vorhergehenden Ansprüche, wobei die Profile (P) der Mündungskante der Bilder mit einem Referenzprofil (Pf) der Abschlusskante verglichen werden, indem als Referenzprofil (Pf) ein Profil der Abschlusskante verwendet wird, an dem ein Tiefpassfilter angelegt wird, um Abweichungen zu erfassen.

13. Verfahren nach einem der Ansprüche 1 bis 9, wobei die Profile (P) der Mündungskante der Bilder mit einem Referenzprofil (Pf) der Abschlusskante verglichen werden, indem ein Hochpassfilter auf die Profile der Mündungskante aufgebracht wird, um Abweichungen zu erfassen.

14. Verfahren nach einem der vorhergehenden Ansprüche, wobei für jedes Bild das Profil (P) der Mündungskante und das Referenzprofil (Pf) der Mündungskante für mindestens mehrere Höhen in der Inspektionszone (ZI) verglichen werden, indem mindestens ein Bereich, eine Amplituden-und/oder Neigungsmessung mit einem Schwellenwert verglichen wird und eine Abweichung detektiert wird, wenn mindestens eine dieser Messungen diesen Schwellenwert überschreitet.

15. Verfahren nach einem der vorhergehenden Ansprüche, wobei das Verfahren darin besteht, mindestens einen horizontalen Formnahtdefekt (JH) zu erfassen, der aus den folgenden Defekten entnommen wird: Knock out (JHK), Flansch (JHF) und Versetzte Mündung (JHO).

16. Verfahren nach einem der vorhergehenden Ansprüche, wobei mindestens ein Detektionskriterium für jeden folgenden Defekt definiert wird, nämlich Knock Out (JHK), Flansch (JHF) und Versetzte Mündung (JHO), und wobei das Verfahren darin besteht, die unter diesen drei Defekten erfassten Defekte unter Verwendung mindestens eines dieser Detektionskriterien zu unterscheiden.

17. Verfahren nach dem vorhergehenden Anspruch, wobei die Form der für mehrere Höhen in der Inspektionszone erfassten Abweichungen als Detektionskriterium für mindestens ein Bild gewählt wird.

18. Verfahren nach einem der Ansprüche 16 oder 17, **dadurch gekennzeichnet, dass** das Winkelausmass der Beobachtung der Abweichungen der Anzahl aufeinanderfolgender Bilder, in denen eine Abweichung erfasst wird, als Detektionskriterium gewählt wird.

19. Verfahren nach Anspruch 17, wobei die Form der Abweichungen, die für mehrere Höhen in der Inspektionszone erfasst werden, analysiert wird, um den Versetzte Mündung (JHO) relativ zu dem Knock Out (JHK) und den Flansch (JHF) - Defekten zu unterscheiden.

20. Verfahren nach einem der Ansprüche 16 bis 19, wobei das Winkelausmass der Beobachtung der Abweichungen analysiert wird, um den Knock Out (JHK) - Defekt relativ zu dem Flansch (JHF) - Defekt zu unterscheiden, indem berücksichtigt wird, dass ein Knock-Out-Defekt detektiert wird, wenn das Winkelausmass der Beobachtung der Abweichungen unter einer festen maximalen Grenze liegt.

21. Das Verfahren nach einem der Ansprüche 16 bis 20, wobei das Winkelausmass der Beobachtung der Abweichungen analysiert wird, um den Knock Out (JHK) - Defekt relativ zu dem Flansch (JHF) - Defekt zu unterscheiden, indem berücksichtigt wird, dass ein Flanschdefekt erkannt wird, wenn das Winkelausmass der Beobachtung der Abweichungen über einer festen Mindestgrenze liegt.

22. Verfahren nach einem der vorhergehenden Ansprüche, wobei für jeden Behälter mit einem horizontalen Formnahtdefekt ein Signal zum Auswerfen des Behälters von einer Produktionslinie gesendet wird.

23. Verfahren nach einem der vorhergehenden Ansprüche, wobei der Behälter (R) auf sich selbst entlang der vertikalen Achse (Z) gemäss mindestens einer Rotationsumdrehung für eine maximale Dauer von 200 ms gedreht wird.

24. Eine Inspektionsvorrichtung, die konfiguriert ist, um ein Verfahren nach einem der vorhergehenden Ansprüche zu implementieren, um auf der Glasbehälterausrüstung Defekte in der horizontalen Formnaht (JH) zu detektieren.

## Claims

1. A method for detecting, on the finish (B) of glass containers (R) each having a vertical axis (Z), defects in the horizontal mold seam (JH), the method comprising, for the detection of defects for each container, the following steps:
- disposing the container (R) between a light source (3) and an image capture camera (4) whose optical axis of observation is substantially perpendicular to an axis parallel to the vertical axis (Z) of the container and whose field of view comprises at least the left edge of the finish or the right edge of the finish, including at least part of the horizontal mold seam;
- ensuring the rotation of the container (R) on itself along the vertical axis (Z) according to at least one rotational revolution;
- acquiring by the camera (4), at each increment of rotation of the container, an image so that the number of images per rotational revolution is greater than 36;
- analyzing for each container, the images captured such that:
* a finish inspection zone (ZI) over a height of the finish including at least part of the horizontal mold seam is defined in the images;
* the profile (P) of the finish edge is detected in the image inspection zone;
* the profiles of the finish edge (P) of the images are compared with a reference profile (Pf) of the finish edge, so as to detect deviations between these profiles of the finish edge and the reference profile of the finish edge;
* and a defect in the horizontal mold seam (JH) for a container is detected when at least one image of said container has a deviation.

2. The method according to claim 1, wherein the camera (4) is disposed such that the field of view comprises at least part of the horizontal mold seam (JH) and a reference whose high-altitude position is known relative to the horizontal mold seam and in that to define the finish inspection zone (ZI) in the images, the reference whose high-altitude position is known relative to the horizontal mold seam is sought, and the finish inspection zone (ZI) is positioned relative to the reference such that the finish inspection zone extends over a height including the horizontal mold seam.

3. The method according to claim 2, wherein all or part of the finish (S) or counter-finish (CB) surface is sought in the images as a reference.

4. The method according to one of the preceding claims, wherein there is an image capture camera (4) having the horizontal width of the field of view comprised between 5 mm and 130 mm and having the height of the field of view comprised between 3 mm and 20 mm.

5. The method according to one of the preceding claims, wherein there is an image capture camera (4) having a resolution greater than 25 pixels/mm.

6. The method according to one of the preceding claims, wherein the image capture camera (4) is positioned such that its optical axis of observation (Y) is substantially tangent to the left or right edge of the finish.

7. The method according to one of the preceding claims, wherein there is a camera (4) provided with a telecentric lens.

8. The method according to one of the preceding claims, wherein there is a light source (3) having vertical and horizontal illumination dimensions comprised between 100% and 200% and preferably 120% of the dimensions of the field of view of the camera (4) multiplied by the distance between the light source and the lens (4a) of the camera and divided by the distance between the axis of the containers and the lens of the camera.

9. The method according to one of the preceding claims, wherein there is a telecentric light source whose illuminated field has dimensions greater than or equal to the dimensions of the field of view of the camera.

10. The method according to one of the preceding claims, wherein the profiles (P) of the finish edge of the images are compared with a reference profile (Pf) of the finish edge, by using as a reference profile (Pf), at least one profile obtained on at least one reference container considered to be compliant, so as to detect deviations.

11. The method according to any one of claims 1 to 9, wherein the profiles (P) of the finish edge of the images are compared with a reference profile (Pf) of the finish edge, by using as reference profile (Pf) an average profile calculated over several increments of rotation of at least one reference container considered to be compliant, so as to detect deviations.

12. The method according to one of the preceding claims, wherein the profiles (P) of the finish edge of the images are compared with a reference profile (Pf) of the finish edge, by using as a reference profile (Pf) a profile of the finish edge to which a low-pass filter is applied, so as to detect deviations.

13. The method according to any one of claims 1 to 9, wherein the profiles (P) of the finish edge of the images are compared with a reference profile (Pf) of the finish edge, by applying a high-pass filter on the profiles of the finish edge, so as to detect deviations.

14. The method according to one of the preceding claims, wherein, for each image, the profile (P) of the finish edge and the reference profile (Pf) of the finish edge are compared for at least several altitudes in the inspection zone (ZI), by comparing at least one area, amplitude and/or slope measurement with a threshold and a deviation is detected when at least one of these measurements exceeds this threshold.

15. The method according to one of the preceding claims, wherein the method consists in detecting at least one horizontal mold seam (JH) defect taken from among the following defects: knock out (JHK), flange (JHF) and overhang/overmatch (JHO).

16. The method according to one of the preceding claims, wherein at least one detection criterion is defined for each following defect, namely knock out (JHK), flange (JHF) and overhang/overmatch (JHO), and to which the method consists in discriminating the defects detected among these three defects by using at least one of these detection criteria.

17. The method according to the preceding claim, wherein the shape of the deviations detected for several altitudes in the inspection zone is chosen as a detection criterion, for at least one image.

18. The method according to one of claim 16 or 17, wherein the angular extent of observation of the deviations corresponding to the number of successive images in which a deviation is detected is chosen as a detection criterion.

19. The method according to claim 17, wherein the shape of the deviations detected for several altitudes in the inspection zone is analyzed in order to discriminate the overhang/overmatch (JHO) defect relative to the knock out (JHK) and flange (JHF) defects.

20. The method according to one of claims 16 to 19, wherein the angular extent of observation of the deviations is analyzed to discriminate the knock out (JHK) defect relative to the flange (JHF) defect, by considering that a knock out defect is detected when the angular extent of observation of the deviations is below a fixed maximum limit.

21. The method according to one of claims 16 to 20, wherein the angular extent of observation of the deviations is analyzed to discriminate the knock out (JHK) defect relative to the flange (JHF) defect, by considering that a flange defect is detected when the angular extent of observation of the deviations is above a fixed minimum limit.

22. The method according to one of the preceding claims, wherein for each container with a horizontal mold seam defect, a signal is sent to eject the container from a production line.

23. The method according to one of the preceding claims, wherein the container (R) is rotated on itself along the vertical axis (Z) according to at least one rotational revolution for a maximum duration of 200 ms.

24. An inspection device configured to implement a method in accordance with any preceding claims, for detecting, on the glass container finish, defects in the horizontal mold seam (JH).
